# EUROPEAN PATENT APPLICATION

(11) **EP 4 299 355 A1**
(43) Date of publication of application: **03.01.2024**
(21) Application number: 22181788.5
(22) Date of filing: 29.06.2022
(51) Int. Cl.: B60K 28/06, B60W 50/14, B60W 40/08

(54) **A METHOD FOR MONITORING HEARTBEAT OF ONE OR MORE OCCUPANTS IN A VEHICLE**

(71) Applicant: VOLVO TRUCK CORPORATION, 405 08 Göteborg (SE)
(72) Inventor: DA ROCHA, Mathilde, 38790 Diemoz (FR); QUIBRIAC, Yann, 69007 Lyon (FR)
(74) Representative: Valea AB

(57) **Abstract**

A computer-implemented method (1) for monitoring heartbeat of one or more occupants (2a, 2b) in a vehicle (3), said method (1) comprising: obtaining (4) first heartbeat data (23) from a first heartbeat sensor (5), the first heartbeat sensor (5) at a driver's seat (6) of the vehicle (3), obtaining (7) second heartbeat data (20) from a second heartbeat sensor (8), the second heartbeat sensor (8) at a bunk (9) of the vehicle (3), determining (10) a current heartbeat irregularity based on at least one of the first heartbeat data (23) and the second heartbeat data (20), and triggering (11) an indication (12) indicating current heartbeat irregularity. Also a monitoring system (21) for performing the computer-implemented method (1), and a vehicle (3) comprising such a monitoring system (21).

## Description

### TECHNICAL FIELD

The present disclosure relates to monitoring of heartbeat irregularities of occupants of a vehicle.

### BACKGROUND

Vehicles provided with a bunk, such as trucks, sometimes carry an occupant seated in the driver's seat of the vehicle and another occupant resting in the bunk of the vehicle. When one of the two occupants experience heartbeat irregularities, the safety of one or more of the occupants may be at risk. If the driver experiences heartbeat irregularities, the driver's ability to safely operate the vehicle may be at risk, thereby presenting increased risks for both occupants and for other people around. Also, if the person resting in the bunk experiences heartbeat irregularities, his/her health may be in danger.

### SUMMARY

An object of the present disclosure is thus to mitigate health concerns and dangers related to heartbeat irregularities of occupants of a vehicle comprising a bunk carrying an occupant.

According to a first aspect, this object is achieved by a computer-implemented method for monitoring heartbeat of one or more occupants of a vehicle, as defined in claim 1 or its dependent claims. The method comprises obtaining first heartbeat data from a first heartbeat sensor, the first heartbeat sensor at a driver's seat of the vehicle. The method further comprises obtaining second heartbeat data from a second heartbeat sensor, the second heartbeat sensor at a bunk of the vehicle. Also, the method comprises determining a current heartbeat irregularity based on at least one of the first heartbeat data and the second heartbeat data. Further, the method comprises triggering an indication indicating current heartbeat irregularity.

The heartbeat sensor at the driver's seat monitors the heartbeat of the occupant of the driver's seat. The second heartbeat sensor at the second driver's seat monitors the heartbeat of the occupant resting in the bunk of the vehicle. By determining a current heartbeat irregularity based on heartbeat data obtained from each respective heartbeat sensor and triggering an indication upon determination of a current heartbeat irregularity each occupant is alerted of a current heartbeat irregularity and can take action. If a heartbeat irregularity of the occupant driving the vehicle, the person in the bunk can act and talk to the other person and optionally take control of the vehicle to avoid accidents and optionally bring the other occupant to a doctor for medical assistance, for example by driving to a hospital. If a heartbeat irregularity of the occupant in the bunk is detected, the occupant of the driver's seat can talk to the other person and bring him/her to a doctor for medical assistance, for example by driving to a hospital. The occupants may also consider taking medicine or giving first aid to the other person or use a heart starter. The present method thus enable early detection of heartbeat irregularity.

The indication may comprise an interior indication to an occupant inside the vehicle. The indication may comprise an audible and/or a visual indication.

The audible indication inside the vehicle will enable an occupant asleep in the bunk to percept the indication despite having his/her eyes closed. The visual indication will enable visual perception of the indication for both occupants in the vehicle.

The interior indication may comprise an indication recommending rest or seeking medical assistance.

Not all heartbeat irregularities are severe and by combining the early detection with a recommendation to the occupants, chances increase that the occupants will realize he/she should rest or seek medical assistance before symptoms related to the current heartbeat irregularity get worse.

The interior indication may comprise information requesting feedback from at least one of the one or more occupants in the vehicle, wherein the method further comprises obtaining feedback from at least one of said one or more occupants in the vehicle, and, if feedback is not obtained within a predetermined period of time, triggering a stop of the vehicle or triggering autonomous navigation of the vehicle to a medical emergency facility.

By requesting feedback from one or more of the occupants in the vehicle it is possible to assess whether or not they are aware of the situation and in control of the situation related to the heartbeat irregularity. If no feedback is received within the predetermined period, it is a sign of the occupants not being in control of the situation and appropriate measures are taken, including, but not limited to, triggering a stop of the vehicle or triggering autonomous navigation of the vehicle to a medical emergency facility. Bringing the vehicle to a stop reduces the speed of the vehicle and thereby reduces the risk of the vehicle crashing. Autonomous navigation of the vehicle reduces the time needed for the occupants to get medical assistance, thereby mitigating severe medical complications.

The indication may comprise an exterior indication to a person outside the vehicle. By providing an exterior indication, persons around the vehicle will be alerted and aware something is not right. By making people aware something is not right, the risk of the vehicle crashing into people is reduced and the chance of other people reaching out to assist the occupants of the vehicle upon stop of the vehicle increases.

The indication may for example be an audible indication, a visual indication and/or a message to a remote management node. The remote management node may be an emergency call center, a fleet manager or other emergency contact.

The exterior indication may be triggered upon determining that the feedback was not obtained within the predetermined period of time.

By triggering the exterior indication after the predetermined time, the occupants of the vehicle have a chance to provide feedback before people outside of the vehicle are alerted by an exterior indication.

The computer-implemented method may further comprise triggering a restriction of driving capabilities of the vehicle in response to determination of a current heartbeat irregularity. Immediately stopping a vehicle is not always safe. By limiting driving capabilities of the vehicle, it is still possible to drive to a safe place to stop.

For example, the limitation may comprise a limitation of the maximum speed of the vehicle or maximum torque of a drive motor of the vehicle.

The determination of a current heartbeat irregularity may comprise determining at least one of a heart stop condition, a tachycardia condition, and irregular heart rhythm.

According to a second aspect, the object is achieved by a monitoring system for monitoring heartbeat of one or more occupants of a vehicle. The monitoring system comprises a processor device of a computing system. The processor device is configured to perform the method defined in claim 1 or any one of its dependent claims. Such methods are also described above.

The monitoring system may further comprise a first heartbeat sensor and a second heartbeat sensor.

The first heartbeat sensor may comprise one or more sensors embedded in the driver's seat, a wearable sensor, or a camera covering at least a portion of a driver's seat of the vehicle. Also, the second heartbeat sensor may comprise one or more sensors embedded in the bunk, a wearable sensor, or a camera covering at least a portion of the bunk of the vehicle.

The first heartbeat sensor may be an electrocardiogram (ECG) sensor, and the second heartbeat sensor may be a ballistocardiogram (BCG) sensor.

According to a third aspect of the present disclosure, the object is achieved by a vehicle comprising a monitoring system according to claim 9 or any one of its dependent claims. Such a system is also described above. The vehicle comprises a bunk and a driver's seat. The first heartbeat sensor is provided at the driver's seat, and the second heartbeat sensor is provided at the bunk.

The vehicle may be a vehicle provided with an autonomous driving system.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above discussed technical effects and corresponding advantages.

### BRIEF DESCRIPTION OF THE DRAWINGS

With reference to the appended drawings, below follows a more detailed description of aspects of the disclosure cited as examples.
Fig. 1 shows an exemplary embodiment of a vehicle cabin of a vehicle comprising a bunk. The vehicle is provided with a monitoring system for monitoring heartbeat of one of more occupants in the vehicle.
Fig. 2 shows a schematic view of an exemplary embodiment of a heartbeat monitoring system.
Fig. 3 shows a schematic view of an exemplary embodiment of a computer-implemented method for monitoring heartbeat of one or more occupants of a vehicle.
Fig. 4 shows a schematic view of an exemplary embodiment of a computer-implemented method for monitoring heartbeat of one or more occupants of a vehicle.
Fig. 5 shows a schematic diagram of an exemplary computer system for implementing examples disclosed herein, according to one example.

### DETAILED DESCRIPTION

Aspects set forth below represent the necessary information to enable those skilled in the art to practice the disclosure.

To mitigate health concerns and dangers related to heartbeat irregularities of occupants of a vehicle 3 comprising a bunk 9 carrying an occupant 2a, 2b, a computer-implemented method 1 for monitoring heartbeat is proposed. The computer-implemented method 1 is performed by a monitoring system 21. The monitoring system 21 is typically provided in the vehicle 3 but may alternatively be a distributed system.

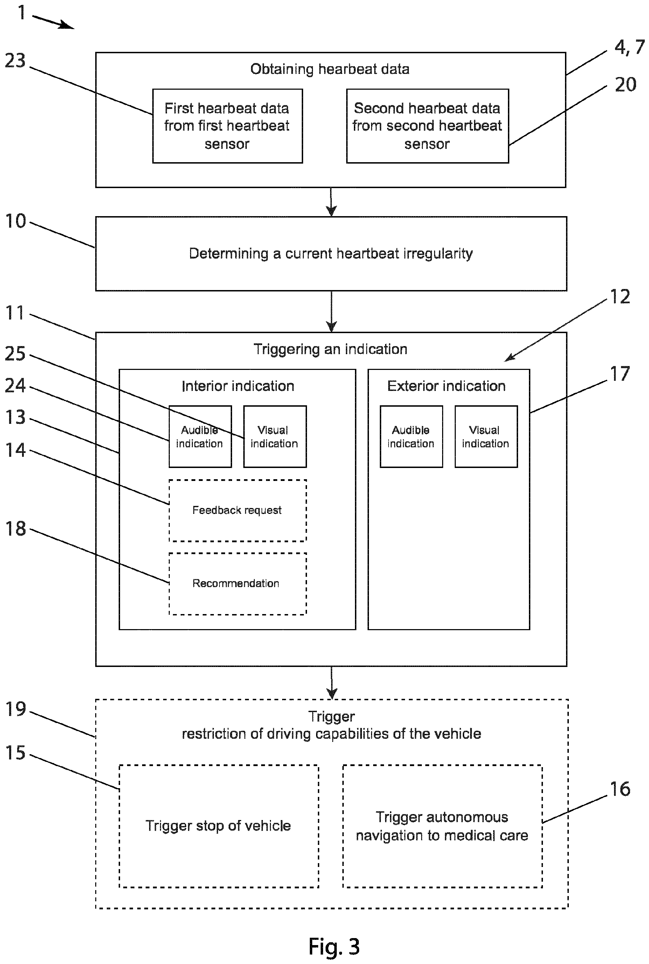

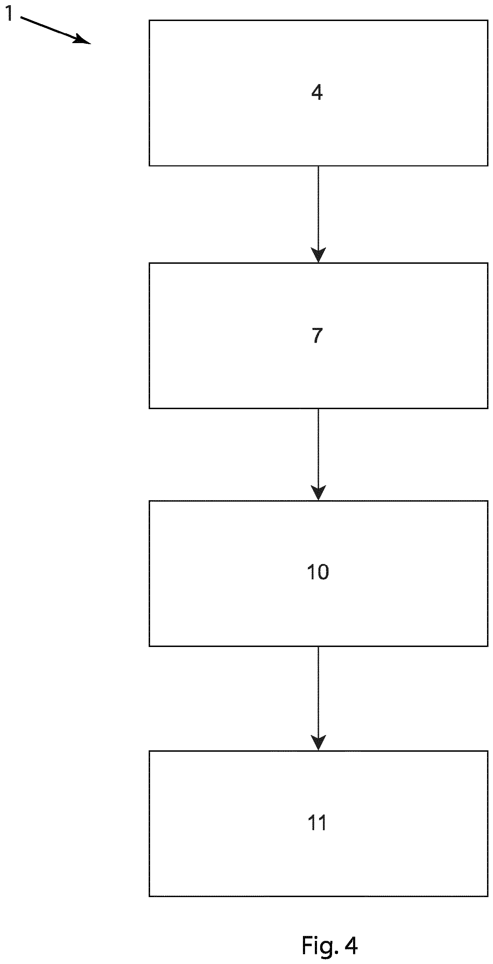

As shown in figs. 3 and 4, an exemplary first embodiment of the computer-implemented method comprises:
obtaining 4 first heartbeat data from a first heartbeat sensor 5, the first heartbeat sensor 5 at a driver's seat 6 of the vehicle 3,
obtaining 7 second heartbeat data from a second heartbeat sensor 8, the second heartbeat sensor 8 at a bunk 9 of the vehicle 3,
determining 10 a current heartbeat irregularity based on at least one of the first heartbeat data and the second heartbeat data; and
triggering 11 an indication 12 indicating current heartbeat irregularity.

Heartbeat irregularities may be classified as irregular heartbeats, bradycardia, tachycardia and/or atrial fibrillation. Heartbeat irregularities may be determined using any suitable method known in the art.

One way to determine irregular pulse is to determine an average pulse period over a predetermined period of time by counting the number of heartbeats during that period of time. Once the average pulse is known, an expected period for the time between consecutive regular pulses is determined. For example an average pulse of 80 beats per minute equals a period of 60 seconds / 80 heartbeats = 0.75 seconds per heartbeat. After a heartbeat, a new heartbeat should thus normally follow after 0.75 seconds. The time to the new heartbeat is measured and the result is compared to the calculated period (0.75 seconds). If the new heartbeat strikes too early or too late, a current heartbeat irregularity in the form of irregular heartbeat is determined. To be able to discard minor variations in heartbeat periods as normal variations, a current heartbeat irregularity in the form of irregular heartbeat is determined to occur only if the new heartbeat deviates more than +-20% from the calculated period (earlier than 0.8*0.75 seconds or later than 1.2*0.75 seconds).

A current bradycardia heartbeat irregularity is determined to occur once the average heartbeat falls below 60 beats per minute. This type of heartbeat irregularity is a low-severe heartbeat irregularity.

A current tachycardia heartbeat irregularity is determined to occur once the average heartbeat rises above 100 pulses per minute. This type of heartbeat irregularity is a severe heartbeat irregularity. This type of heartbeat irregularity is a medium-severe heartbeat irregularity.

A current atrial fibrillation irregularity is determined to occur once the heartbeat rises above 300 beats per minute. This type of heartbeat irregularity is a high-severe heartbeat irregularity.

In the exemplary first embodiment, the indication 12 comprises an interior indication 13 to an occupant 2a, 2b inside the vehicle 3. The interior indication 13 comprises an audible 24 and a visual 25 indication but may in other embodiments alternatively comprise either one of the audible 24 and the visual 25 indication, or any other suitable type of indication, such as mechanical vibration induced in any suitable way, such as through seat, bunk, chassis or steering wheel.

The interior indication 13 comprises an indication 18 recommending rest or seeking medical assistance. If a low-severe heartrate irregularity is determined, rest is recommended. If a medium-severe or high-severe heartbeat irregularity is determined, seeking medical assistance is recommended. In other embodiments, the recommendations may alternatively be omitted or additional types of recommendations may be provided.

The interior indication 13 comprises information 14 requesting feedback from at least one of the one or more occupants 2a, 2b in the vehicle 3. The computer-implemented method 1 further comprises obtaining feedback from at least one of said one or more occupants 2a, 2b in the vehicle 3, and, if feedback is not obtained within a predetermined period of time, triggering 15 a stop of the vehicle 3 or triggering 16 autonomous navigation of the vehicle 3 to a medical emergency facility. In other embodiments, especially for vehicles not capable of autonomous navigation, the method may alternatively not comprise triggering 16 of autonomous navigation.

Feedback may be obtained through provision of physical buttons, through a touch-screen user interface and/or through a handheld device or wearable device such as a smartphone or smartwatch. Alternatively, feedback may be obtained using a microphone listening for voice commands.

The indication 12 may also comprises an exterior indication 17 to a person outside the vehicle 3, such as an audible indication, a visual indication and/or a message to a remote management node, such as an emergency call center, a fleet manager or other emergency contact. The audible indication may be a beeping sound and/or a voice prompt. The visual indication may be provided by operating a plurality of blinking light sources distributed around the vehicle. In other embodiments, the exterior indication 17 may alternatively be omitted.

The exterior indication 17 is triggered upon determining that the feedback was not obtained within the predetermined period of time. In other embodiments, any other suitable logic for when to trigger exterior indication 17 may alternatively be used instead of waiting for the predetermined period of time. For example, exterior indication 17 could be triggered immediately upon determining 10 a current heartbeat irregularity.

The computer-implemented method 1 further comprises triggering 19 a restriction of driving capabilities of the vehicle 3 in response to determination 10 of a current heartbeat irregularity. In this embodiment, the limitation is a limitation of the maximum speed of the vehicle 3 but in other embodiments, the restriction may instead comprise restriction maximum torque of a drive motor of the vehicle 3, bringing the vehicle to a full stop, or the restriction of driving capabilities may be omitted. The restriction of driving capabilities of the vehicle is achieved by electronic communication with an onboard computing system of the vehicle, for example through a CAN-bus interface, although any other suitable way of interacting with the vehicle control system may be used instead.

The determination 10 of a current heartbeat irregularity comprises determining at least one of a heart stop condition, a tachycardia condition, and/or irregular heart rhythm.

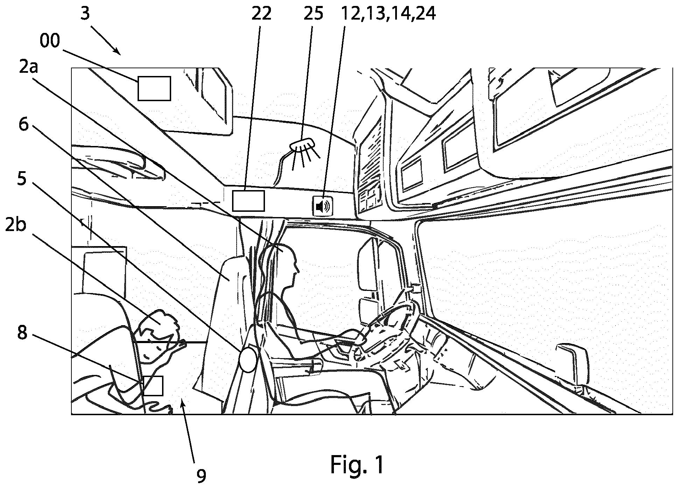

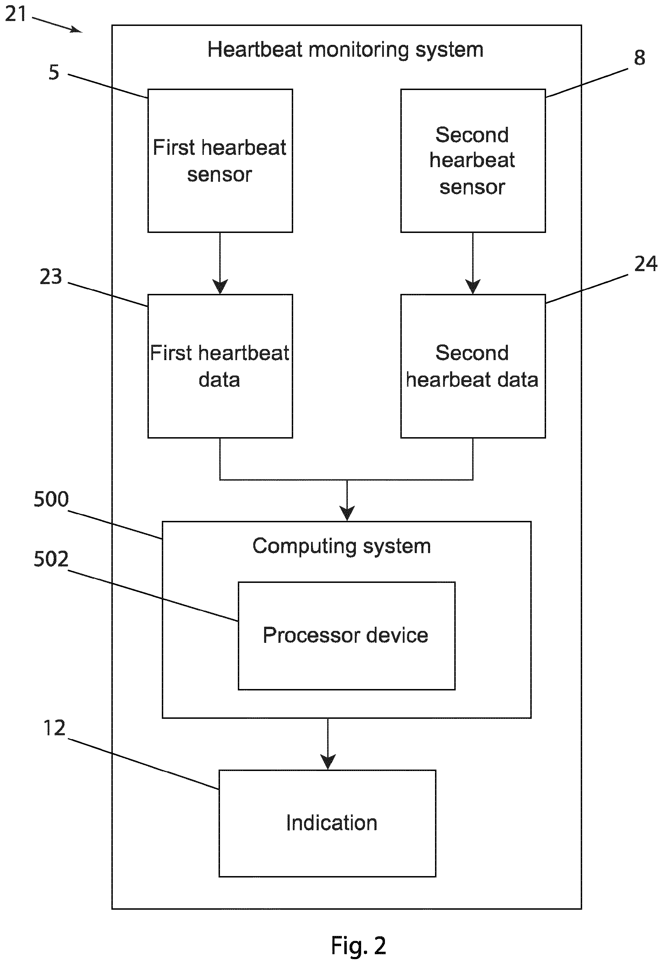

As mentioned above, the method is performed by a monitoring system 21. As shown in figs. 1 and 2, the monitoring system 21 comprises a processor device 502 of a computing system 500. The processor device 502 is configured to perform the computer-implemented method 1 described above. The monitoring system 21 further comprises a first heartbeat sensor 5 and a second heartbeat sensor 8.

The first heartbeat sensor 5 comprises one or more sensors embedded in the driver's seat but may in other embodiments alternatively or additionally comprise a wearable sensor or a camera-based heartbeat sensor covering at least a portion of a driver's seat 6 of the vehicle 3 such that it is able to sense heartbeat of a person seated in the driver's seat 6. The driver's seat comprises a backrest, and a seating portion extending substantially horizontally forward of a lower portion of the backrest. If the first heartbeat sensor is embedded in the driver's seat, the position of the first heartbeat sensor could be about 30 cm above the seating portion. Also, the first heartbeat sensor could be horizontally centered with respect to the backrest of the seat.

Similarly, the second heartbeat sensor 8 comprises one or more sensors embedded in the interior of the bunk 9, such as below a mattress of the bunk at a location corresponding to a probable location of the thorax of an adult resting in the bunk. However, the second heartbeat sensor 8 may in other embodiments alternatively comprise a wearable sensor, or a camera-based heartbeat sensor covering at least a portion of the bunk 9 of the vehicle 3 such that it is able to sense heartbeat of a person resting in the bunk 9.

The first heartbeat sensor 5 may be an electrocardiogram (ECG) sensor, and the second heartbeat sensor 8 may be a ballistocardiogram BCG sensor. In other embodiments, any other suitable sensor type may be used instead, such as the above mentioned camera-based sensors or wearable sensors.

As mentioned above, the present disclosure also suggest providing a vehicle 3 with the monitoring system 21. The vehicle 3 further comprises a bunk 9 and a driver's seat 6. In this embodiment of the vehicle, the first heartbeat sensor 5 is provided at the driver's seat 6. The positioning of the first heartbeat sensor 5 at the driver's seat 6 is such that the first heartbeat sensor 5 is able to sense the heartbeat of a person seated in the driver's seat 6 but should not be construed to mean that the first heartbeat sensor 5 has to be positioned on or in the driver's seat 6.

In this embodiment of the vehicle 3, the second heartbeat sensor 8 is provided at the bunk 9. The positioning of the second heartbeat sensor 8 at the bunk 9 is such that the second heartbeat sensor 8 is able to sense the heartbeat of a person resting in the bunk 9 but should not be construed to mean that the second heartbeat sensor 8 has to be positioned on or in the bunk 9.

The vehicle 3 is a vehicle 3 provided with an autonomous driving system 22 but may in other embodiments the autonomous driving system 22 may alternatively be omitted.

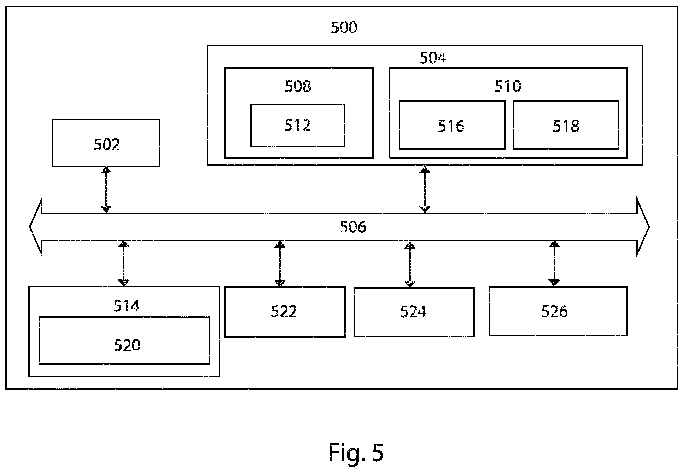

Fig. 5 is a schematic diagram of a computer system 500 for implementing examples disclosed herein. The computer system 500 is adapted to execute instructions from a computer-readable medium to perform these and/or any of the functions or processing described herein. The computer system 500 may be connected (e.g., networked) to other machines in a LAN, an intranet, an extranet, or the Internet. While only a single device is illustrated, the computer system 500 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 500 may comprise at least one computing device or electronic device capable of including firmware, hardware, and/or executing software instructions to implement the functionality described herein. The computer system 500 may include a processor device 502 (may also be referred to as a control unit), a memory 504, and a system bus 506. The computer system 500 may include at least one computing device having the processor device 502. The system bus 506 provides an interface for system components including, but not limited to, the memory 504 and the processor device 502. The processor device 502 may include any number of hardware components for conducting data or signal processing or for executing computer code stored in memory 504. The processor device 502 (e.g., control unit) may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processor device may further include computer executable code that controls operation of the programmable device.

The system bus 506 may be any of several types of bus structures that may further interconnect to a memory bus (with or without a memory controller), a peripheral bus, and/or a local bus using any of a variety of bus architectures. The memory 504 may be one or more devices for storing data and/or computer code for completing or facilitating methods described herein. The memory 504 may include database components, object code components, script components, or other types of information structure for supporting the various activities herein. Any distributed or local memory device may be utilized with the systems and methods of this description. The memory 504 may be communicably connected to the processor device 502 (e.g., via a circuit or any other wired, wireless, or network connection) and may include computer code for executing one or more processes described herein. The memory 504 may include non-volatile memory 508 (e.g., read-only memory (ROM), erasable programmable read-only memory (EPROM), electrically erasable programmable read-only memory (EEPROM), etc.), and volatile memory 510 (e.g., random-access memory (RAM)), or any other medium which can be used to carry or store desired program code in the form of machine-executable instructions or data structures and which can be accessed by a computer or other machine with a processor device 502. A basic input/output system (BIOS) 512 may be stored in the non-volatile memory 508 and can include the basic routines that help to transfer information between elements within the computer system 500.

The computer system 500 may further include or be coupled to a non-transitory computer-readable storage medium such as the storage device 514, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 514 and other drives associated with computer-readable media and computer-usable media may provide non-volatile storage of data, data structures, computer-executable instructions, and the like.

A number of modules can be implemented as software and/or hard-coded in circuitry to implement the functionality described herein in whole or in part. The modules may be stored in the storage device 514 and/or in the volatile memory 510, which may include an operating system 516 and/or one or more program modules 518. All or a portion of the examples disclosed herein may be implemented as a computer program product 520 stored on a transitory or non-transitory computer-usable or computer-readable storage medium (e.g., single medium or multiple media), such as the storage device 514, which includes complex programming instructions (e.g., complex computer-readable program code) to cause the processor device 502 to carry out the method/method steps described herein. Thus, the computer-readable program code can comprise software instructions for implementing the functionality of the examples described herein when executed by the processor device 502. The processor device 502 may serve as a controller, or control system, for the computer system 500 that is to implement the functionality described herein.

The computer system 500 also may include an input device interface 522 (e.g., input device interface and/or output device interface). The input device interface 522 may be configured to receive input and selections to be communicated to the computer system 500 when executing instructions, such as from a keyboard, mouse, touch-sensitive surface, etc. Such input devices may be connected to the processor device 502 through the input device interface 522 coupled to the system bus 506 but can be connected through other interfaces such as a parallel port, an Institute of Electrical and Electronic Engineers (IEEE) 1394 serial port, a Universal Serial Bus (USB) port, an IR interface, and the like. The computer system 500 may include an output device interface 524 configured to forward output, such as to a display, a video display unit (e.g., a liquid crystal display (LCD) or a cathode ray tube (CRT)). The computer system 500 may also include a communications interface 526 suitable for communicating with a network as appropriate or desired.

The operational steps described in any of the exemplary aspects herein are described to provide examples and discussion. The steps may be performed by hardware components, may be embodied in machine-executable instructions to cause a processor to perform the steps, or may be performed by a combination of hardware and software. Although a specific order of method steps may be shown or described, the order of the steps may differ. In addition, two or more steps may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A computer-implemented method (1) for monitoring heartbeat of one or more occupants (2a, 2b) in a vehicle (3), said method (1) comprising:
obtaining (4) first heartbeat data (23) from a first heartbeat sensor (5), the first heartbeat sensor (5) at a driver's seat (6) of the vehicle (3),
obtaining (7) second heartbeat data (20) from a second heartbeat sensor (8), the second heartbeat sensor (8) at a bunk (9) of the vehicle (3),
determining (10) a current heartbeat irregularity based on at least one of the first heartbeat data (23) and the second heartbeat data (20); and
triggering (11) an indication (12) indicating current heartbeat irregularity.

2. The computer-implemented method (1) according to claim 1, wherein the indication (12) comprises an interior indication (13) to an occupant (2a, 2b) inside the vehicle (3).

3. The computer-implemented method (1) according to claim 2, wherein the interior indication (13) comprises an indication (18) recommending rest or seeking medical assistance.

4. The computer-implemented method (1) according to any one of claims 2-3, wherein the interior indication (13) comprises information (14) requesting feedback from at least one of the one or more occupants (2a, 2b) in the vehicle (3), and wherein the method (1) further comprises obtaining feedback from at least one of said one or more occupants (2a, 2b) in the vehicle (3), and, if feedback is not obtained within a predetermined period of time, triggering (15) a stop of the vehicle (3) or triggering (16) autonomous navigation of the vehicle (3) to a medical emergency facility.

5. The computer-implemented method (1) according to any one of claims 1-4, wherein the indication (12) comprises an exterior indication (17) to a person outside the vehicle (3).

6. The computer-implemented method (1) according to claims 5 dependent on claim 4, wherein the exterior indication (17) is triggered upon determining that the feedback was not obtained within the predetermined period of time.

7. The computer-implemented method (1) according to any one of claims 1-6, further comprising triggering (19) a restriction of driving capabilities of the vehicle (3).

8. The computer-implemented method (1) according to any one of claims 1-7, wherein the determination (10) of a current heartbeat irregularity comprises determining at least one of a heart stop condition, a tachycardia condition, and irregular heart rhythm.

9. A monitoring system (21) for monitoring heartbeat of one or more occupants (2a, 2b) of a vehicle (3), said monitoring system (21) comprising a processor device (502) of a computing system (500), said processor device (502) being configured to perform the computer-implemented method (1) defined in any one of claims 1-8.

10. The monitoring system (21) according to claim 9, further comprising a first heartbeat sensor (5) and a second heartbeat sensor (8).

11. The monitoring system (21) according to claim 10, wherein the first heartbeat sensor (5) comprises one or more sensors embedded in the driver's seat (6), a wearable sensor, or a camera covering at least a portion of a driver's seat (6) of the vehicle (3), and wherein the second heartbeat sensor (8) comprises one or more sensors embedded in the bunk (9), a wearable sensor, or a camera covering at least a portion of the bunk (9) of the vehicle (3).

12. The monitoring system (21) according to claim 11, wherein the first heartbeat sensor is an electrocardiogram (ECG) sensor, and wherein the second heartbeat sensor is a ballistocardiogram (BCG) sensor.

13. A vehicle (3) comprising a monitoring system (21) according to any one of claims 9-12, said vehicle (3) further comprising a bunk (9) and a driver's seat (6), wherein the first heartbeat sensor (5) is provided at the driver's seat (6), and wherein the second heartbeat sensor (5) is provided at the bunk (9).

14. A vehicle (3) according to claim 13, wherein the vehicle (3) is a vehicle (3) provided with an autonomous driving system (22).
